Europäisches Patentamt

European Patent Office

Office européen des brevets

(19)

(11) Veröffentlichungsnummer : **0 354 613 B1**

(12) # EUROPÄISCHE PATENTSCHRIFT

(45) Veröffentlichungstag der Patentschrift :
18.03.92 Patentblatt 92/12

(51) Int. Cl.$^5$ : **C22B 7/02,** B03C 3/00,
B03C 3/01

(21) Anmeldenummer : 89202002.5

(22) Anmeldetag : 29.07.89

(54) **Verfahren zum Reinigen der Abgase einer Sinteranlage.**

(30) Priorität : 04.08.88 DE 3826500

(43) Veröffentlichungstag der Anmeldung :
14.02.90 Patentblatt 90/07

(45) Bekanntmachung des Hinweises auf die
Patenterteilung :
18.03.92 Patentblatt 92/12

(84) Benannte Vertragsstaaten :
DE FR GB IT

(56) Entgegenhaltungen :
GB-A- 1 035 667

(56) Entgegenhaltungen :
US-A- 3 444 668
CHEMIE INGENIEUR TECH., Band 57, Nr. 6,
Juni 1985, Seiten 493-500, VCH Verlagsgesellschaft mbH, Weinheim, DE; G. MAYER-
SCHWINNING: "Fortschritte bei der Abscheidung von Stäuben im Elektrofilter unter Berücksichtigung der Schadgas-Adsorption"

(73) Patentinhaber : METALLGESELLSCHAFT AG
Reuterweg 14 Postfach 3724
W-6000 Frankfurt/M.1 (DE)

(72) Erfinder : Mayer-Schwinning, Gernot
In den Hessengärten 8
W-6380 Bad Homburg (DE)

EP 0 354 613 B1

**Beschreibung**

Die Erfindung betrifft ein Verfahren zum Reinigen der Abgase aus einer Sinteranlage, wobei man die Abgase durch ein Elektrofilter leitet und ein Chloride enthaltendes Staubgemisch abscheidet, das man zum Teil in die Sinteranlage zurückführt.

Über Sinteranlagen und die Reinigung der Abgase durch ein Elektrofilter wird in der Zeitschrift "Blast Furnace, Coke Oven and Raw Materials, Proceedings" 18(1959), S. 233-249 berichtet. Wegen der heterogenen Zusammensetzung der im Abgas von Sinteranlagen enthaltenen Feststoffe bereitet die Reinigung dieser Abgase erhebliche Schwierigkeiten. Probleme entstehen vor allem durch die im Abgas enthaltenen Salze, insbesondere Alkalichloride, die sich im Elektrofilter nur schwer abscheiden lassen. Wenn man die abgeschiedenen Feststoffe, wie das üblich ist, zumindest teilweise in die Sinteranlage zurückführt, nimmt der Gehalt der schwer abzuscheidenden Feststoffe im Abgas immer weiter zu, was ein aufwendiges Elektrofilter nötig macht.

Der Erfindung liegt die Aufgabe zugrunde, die im Elektrofilter abgeschiedenen Chloride möglichst weitgehend aus dem Verfahren zu entfernen, ohne aber die Menge der zu deponierenden Feststoffe störend anwachsen zu lassen. Erfindungsgemäß gelingt dies beim eingangs genannten Verfahren dadurch, daß man mindestens einen Teil des Staubgemisches mit einem Lösungsmittel versetzt und die Chloride löst, aus der Lösung Feststoffe abtrennt, die Lösung in einem Sprühtrockner mit heißem Abgas aus der Sinteranlage in direkten Kontakt bringt, aus dem Sprühtrockner weitgehend getrocknete Chloride entfernt und das lösungsmittelhaltige Abgas des Sprühtrockners zum Elektrofilter leitet. Da die getrockneten Chloride üblicherweise reich an Kaliumchlorid sind, ist es möglich, sie zur Herstellung von Düngemitteln zu verwenden; ansonsten werden sie deponiert.

Es empfiehlt sich, als Lösungsmittel Wasser zu verwenden, wobei ein erheblicher Teil dieses Wassers im Abgas des Sprühtrockners enthalten ist und in das Elektrofilter gelangt. Die Anreicherung des im Elektrofilter zu behandelnden Abgases mit Wasserdampf, welcher die Abscheideleistung des Filters verbessert, geschieht somit auf einfache und kostengünstige Weise.

Es hat sich gezeigt, daß die im Elektrofilter abgeschiedenen Salze vorwiegend im Bereich in der Nähe des Gasaustritts des Elektrofilters anfallen und sich in den zugehörigen Bunkern anreichern. Man kann deshalb diesen Bereich des Elektrofilters als Naßelektrofilter ausbilden, wobei das in das Elektrofilter eingesprühte Wasser die abgeschiedenen Salze, insbesondere Chloride, bereits im Bunker löst.

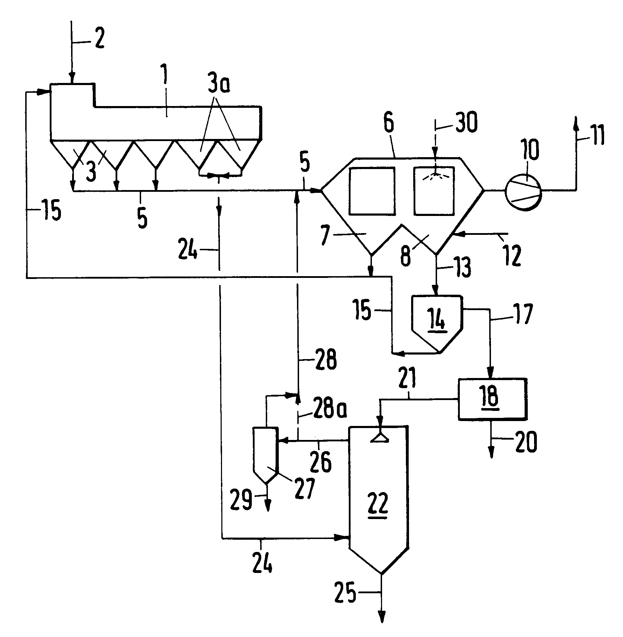

Einzelheiten des Verfahrens werden mit Hilfe der Zeichnung erläutert.

In einer an sich bekannten Sinteranlage (1), welcher man Erz durch die Leitung (2) zuführt, werden durch Saugkästen (3) feststoffhaltige Abgase nach unten abgeführt und in der Sammelleitung (5) einem Elektrofilter (6) aufgegeben. Die im Elektrofilter (6) abgeschiedenen Feststoffe sammeln sich in mehreren Bunkern (7,8), von denen zur Vereinfachung in der Zeichnung nur zwei dargestellt sind. Das entstaubte Abgas gelangt unter der Wirkung des Gebläses (10) in den Kamin (11).

Salze, insbesondere Alkalichloride, die sich nicht im Abgas anreichern sollen, werden im Elektrofilter bevorzugt in der Nähe des Gasaustritts abgeschieden und sammeln sich im Bunker (8). Zum Lösen dieser Salze gibt man dem Bunker durch die Leitung (12) Wasser zu und leitet das entstehende Gemisch durch den Ablauf (13) in einen Absetzbehälter (14). Nicht gelöste Feststoffe, insbesondere Feinerz, sammelt sich als feststoffhaltige Phase im unteren Bereich des Behälters (14) und wird durch die Leitung (15) zusammen mit den Feststoffen aus dem Bunker (7) in die Sinteranlage (1) zurückgeführt.

Die im Absetzbehälter (14) entstehende, weitgehend feststofffreie Salzlösung gelangt in der Leitung (17) vorzugsweise zunächst zu einer Fällungsanlage (18) für die Abtrennung von Schwermetallen. In der Anlage (18) werden die Schwermetalle z.B. durch Zugabe von Fällungsmitteln in unlösliche Verbindungen umgewandelt und abgetrennt. Abgetrennte Schwermetalle werden in der Leitung (20) abgezogen und zumeist deponiert. Die von Schwermetallen weitgehend befreite Salzlösung wird in der Leitung (21) zu einem Sprühtrockner (22) geführt und versprüht.

Dem Sprühtrockner (22) führt man einen Teilstrom des heißen Abgases aus der Sinteranlage durch die Leitung (24) zu, die Temperatur dieses Abgas-Teilstroms liegt üblicherweise im Bereich von 200 bis 400°C. Bevorzugt entnimmt man diesen Abgas-Teilstrom dem heißesten Bereich der Sinteranlage (1), deren Saugkästen (3a) sich im letzten Drittel der Sinteranlage befinden. Die heißen Abgase aus der Leitung (24) nehmen im Sprühtrockner (22) die Feuchtigkeit der aus der Leitung (21) kommenden, eingesprühten Lösung auf, so daß weitgehend getrocknete Salze auf den Boden des Sprühtrockners sinken und durch die Leitung (25) abgezogen werden. Die wasserdampfhaltigen Abgase verlassen den Sprühtrockner (22) durch die Leitung (26), werden in einem Zyklon (27) grob entstaubt und dann durch die Leitung (28) den heißen Abgasen der Leitung (5) zugemischt. Die im Zyklon (27) in der Leitung (29) anfallenden Feststoffe werden bevorzugt ebenfalls wieder der Sinteranlage (1) zugeführt. Falls der Entstaubungszyklon (27) entfallen kann, leitet man die Abgase durch die Bypassleitung (28a) und die Leitung (28) direkt zum Elektrofilter (6).

Man kann den Bereich des Elektrofilters (6), der sich in der Nähe des Gasaustritts befindet, als Naßelektrofilter ausbilden. Dieser Filterbereich ist dann mit einer Wasserzufuhr (30) versehen, wobei dieses Wasser im zugehörigen Filterbereich versprüht wird. Die abgeschiedenen Feststoffe sammeln sich als Schlamm im zugehörigen Bunker (8), wobei es überflüssig werden kann, zusätzliches Wasser durch die Leitung (12) heranzuführen. Der Schlamm wird dann im Absetzbehälter (14) in der beschriebenen Weise behandelt.

Beispiel

In einer der Zeichnung entsprechenden Anlage, in welcher jedoch die Schwermetallabtrennung (18) und der Zyklon (27) fehlen, wird der Sinteranlage (1) durch die Leitung (2) ein Eisenfeinerz, Zuschlagstoffe und Feinkoks enthaltendes Gemisch mit einem Gehalt an CaO und $SiO_2$ im Gewichtsverhältnis von 1,8 (Basizität) zugeführt. Die Sinteranlage mit einer Saugfläche von 280 m$^2$ erzeugt Abgas in einer Gesamtmenge von 800 000 Nm$^3$/h, welches mit einer Temperatur von 134°C, einem Wassertaupunkt von 40°C und einem Staubgehalt von 1 g/m$^3$ in das Elektrofilter (6) eintritt. Mit dem Abgas führt man dem Elektrofilter pro Stunde 800 kg Staub zu.

Im letzten Bunker (8) des Elektrofilters sammeln sich 300 kg/h Staub an, der zu 62 Gew.-% aus löslichen Salzen, insbesondere KCl und NaCl, besteht. Dieser Staub wird mit 1 900 kg/h Wasser versetzt und dem Absetzbehälter (14) zugeführt. Dem Sprühtrockner (22) führt man pro Stunde etwa 2 000 kg chloridhaltige Lösung und durch die Leitung (24) etwa 30 000 Nm$^3$ Abgas mit einer Temperatur von 270°C zu. Die Restfeuchte des Salzes in der Leitung (25) liegt bei 3 Gew.-%. Das Abgas in der Leitung (28) hat eine Temperatur von 140°C. Dadurch, daß der Hauptteil der Chloride über den Sprühtrockner (22) abgetrennt wird, erreicht man trotz der Rückführung des größten Teils der im Elektrofilter abgeschiedenen Feststoffe im gereinigten Abgas des Kamins (11) einen Staubgehalt von nur 30 mg/Nm$^3$.

## Patentansprüche

1. Verfahren zum Reinigen der Abgase aus einer Sinteranlage, wobei man die Abgase durch ein Elektrofilter leitet und ein Chloride enthaltendes Staubgemisch abscheidet, das man zum Teil in die Sinteranlage zurückführt, dadurch gekennzeichnet, daß man mindestens einen Teil des Staubgemisches mit einem Lösungsmittel versetzt und die Chloride löst, aus der Lösung Feststoffe abtrennt, die Lösung in einem Sprühtrockner mit heißem Abgas aus der Sinteranlage in direkten Kontakt bringt, aus dem Sprühtrockner weitgehend getrocknete Chloride entfernt und das lösungsmittelhaltige Abgas des Sprühtrockners zum Elektrofilter leitet.

2. Verfahren nach Anspruch 1, dadurch gekennzeichnet, daß man als Lösungsmittel Wasser verwendet.

3. Verfahren nach Anspruch 1 oder 2, dadurch gekennzeichnet, daß man aus der chloridhaltigen Lösung vor Einleiten in den Sprühtrockner Schwermetalle abtrennt.

4. Verfahren nach Anspruch 2 oder 3, dadurch gekennzeichnet, daß man in das Elektrofilter im Bereich in der Nähe des Gasaustritts Wasser einsprüht.

## Claims

1. Method for cleaning the waste gases from a sintering plant, wherein the waste gases are passed through an electrostatic precipitator and a chloride-containing dust mixture is separated off and is recycled in part into the sintering plant, characterised in that a solvent is added to at least part of the dust mixture and the chlorides are dissolved, solids are separated off from the solution, the solution is brought into direct contact with hot waste gas from the sintering plant in a spray dryer, largely dried chlorides are removed from the spray dryer and the solvent-containing waste gas from the spray dryer is supplied to the electrostatic precipitator.

2. Method according to Claim 1, characterised in that water is used as the solvent.

3. Method according to Claim 1 or 2, characterised in that heavy metals are separated off from the chloride-containing solution before introduction into the spray dryer.

4. Method according to Claim 2 or 3, characterised in that water is sprayed into the electrostatic precipitator in the region in the vicinity of the gas emergence point.

## Revendications

1. Procédé d'épuration de l'effluent gazeux d'une installation de frittage, avec passage de l'effluent gazeux dans un électrofiltre et séparation d'un mélange de poussières contenant des chlorures, que l'on retourne en

EP 0 354 613 B1

partie à l'installation de frittage, caractérisé en ce qu'il consiste à mélanger au moins une partie du mélange de poussières à un solvant et à dissoudre les chlorures, à séparer les matières solides de la solution, à mettre la solution dans un séchoir à pulvérisation en contact direct avec un effluent gazeux chaud de l'installation de frittage, à éliminer des chlorures séchés dans une grande mesure du séchoir à pulvérisation et à envoyer l'effluent gazeux contenant le solvant du séchoir à pulvérisation à l'électrofiltre.

2. Procédé selon la revendication 1, caractérisé en ce qu'il consiste à utiliser de l'eau comme solvant.

3. Procédé selon la revendication 1 ou 2, caractérisé en ce qu'il consiste à séparer des métaux lourds de la solution contenant des chlorures avant de l'envoyer dans le séchoir à pulvérisation.

4. Procédé selon la revendication 2 et 3, caractérisé en ce qu'il consiste à pulvériser de l'eau dans l'électrofiltre à proximité de la sortie des gaz.

4